# EUROPEAN PATENT SPECIFICATION

(11) **EP 4 339 458 B1**
(45) Date of publication and mention of the grant of the patent: **01.10.2025**
(21) Application number: 22861052.3
(22) Date of filing: 28.07.2022
(51) Int. Cl.: F03D 80/50, B29C 73/02, F03D 1/06, B23P 6/00, F01D 5/00, F01D 5/14, F01D 5/28

(54) **BLADE REPAIR METHOD AND BLADE**
SCHAUFELREPARATURVERFAHREN UND SCHAUFEL
PROCÉDÉ DE RÉPARATION DE PALE ET PALE

(30) Priority: 27.08.2021 JP 2021139303
(43) Date of publication of application: 20.03.2024
(73) Proprietor: Mitsubishi Heavy Industries, Ltd., Tokyo 100-8332 (JP)
(72) Inventor: FUJITA, Takeshi, Tokyo 100-8332 (JP); YUGE, Atsushi, Tokyo 100-8332 (JP); SHINDO, Kentaro, Tokyo 100-8332 (JP); KAWASETSU, Nozomu, Tokyo 100-8332 (JP); TAKEUCHI, Hiroaki, Tokyo 100-8332 (JP); HIRANO, Toshiyuki, Tokyo 100-8332 (JP)
(74) Representative: Studio Torta S.p.A.
(86) International application number: PCT/JP2022/029169
(87) International publication number: WO 2023/026761

(56) References cited:
- JP-A- 2001 303 903
- JP-A- 2003 176 727
- JP-A- 2009 285 917
- JP-A- 2009 285 917
- JP-A- 2014 148 984
- JP-A- 2014 148 984
- JP-A- 2020 084 217
- JP-A- 2020 084 217
- US-A1- 2012 094 099
- US-A1- 2020 298 351

## Description

### Field

The present disclosure relates to a method for repairing a blade and the blade.

### Background

On a blade that is disposed on a windmill or the like used for a wind power generation device, erosion damage is caused when raindrops, dust, and the like repeatedly collide with a leading edge portion thereof. To suppress such erosion damage, there is known a configuration in which a leading edge protector is arranged on the leading edge portion of the blade (for example, refer to Patent Literature 1).

### Citation List

### Patent Literature

Patent Literature 1: WO 2018/219524
Patent Literature 2: JP2014148984
Patent Literature 3: US2020298351

### Summary

### Technical Problem

The blade on which the leading edge protector is arranged as described above may be damaged by lightning or the like, for example. In such a case, there is a demand for a technique capable of appropriately performing repair.

The present disclosure has been made in view of such a situation, and provides a blade and a method for repairing the blade capable of appropriately repairing damage.

### Solution to Problem

A method for repairing a blade according to the present disclosure is defined in claim 1.

A blade according to the present disclosure is defined in claim 12.

### Advantageous Effects of Invention

The present disclosure can provide a blade and a method for repairing the blade capable of appropriately repairing damage.

### Brief Description of Drawings

FIG. 1 is a diagram illustrating an example of a wind power generation device in which a blade according to the present embodiment is used.
FIG. 2 is a schematic diagram illustrating a configuration of the blade.
FIG. 3 is a flowchart illustrating an example of a method for repairing the blade according to the present embodiment.
FIG. 4 is a flowchart illustrating an example of a procedure of determination for setting a repair aspect at a setting step.
FIG. 5 is a diagram illustrating an example (first aspect) of the repair aspect.
FIG. 6 is a diagram illustrating an example (second aspect) of the repair aspect.
FIG. 7 is a diagram illustrating another example (second aspect) of the repair aspect.
FIG. 8 is a diagram illustrating another example (second aspect) of the repair aspect.
FIG. 9 is a diagram illustrating an example (third aspect) of the repair aspect.
FIG. 10 is a diagram illustrating an example (fourth aspect) of the repair aspect.
FIG. 11 is a diagram illustrating an example (fifth aspect) of the repair aspect.
FIG. 12 is a diagram illustrating another example (fifth aspect) of the repair aspect.
FIG. 13 is a diagram illustrating another example (fifth aspect) of the repair aspect.

### Description of Embodiments

The following describes embodiments of a blade and a method for manufacturing the blade according to the present disclosure based on the drawings. The present invention is not limited to the embodiments. Constituent elements in the embodiments described below encompass a constituent element that can be easily replaced by those skilled in the art, or substantially the same constituent element. The present embodiment exemplifies a blade used for a wind power generation device, but the embodiment is not limited thereto. In another embodiment, the blade may be a blade of an aircraft or a blade of a helicopter (rotor blade). In still another embodiment, the blade may be a turbine blade of an engine, a gas turbine, or a steam turbine. In yet another embodiment, the blade may be a blade used for a blower or the like in a power generation plant, a chemical plant, and the like.

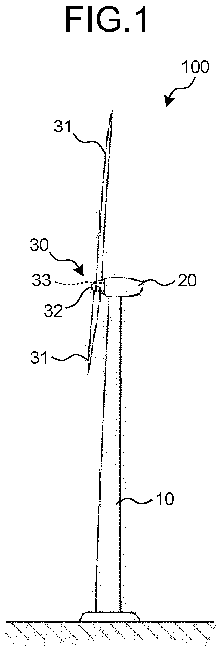

FIG. 1 is a diagram illustrating an example of a wind power generation device 100 in which a blade 31 according to the present embodiment is used. As illustrated in FIG. 1, the wind power generation device 100 includes a tower 10, a power generator 20, and a windmill 30. The tower 10 is installed on the ground or the like, for example, and supports the power generator 20 at a top part thereof. The power generator 20 includes a rotating shaft 21. The windmill 30 is attached to the rotating shaft of the power generator 20. The windmill 30 includes the blade 31, a hub 32, and a rotor 33. At least one blade 31 is disposed, and attached to the hub 32. The hub 32 is fixed to the rotor 33. The rotor 33 is supported to be able to rotate about a rotation center axis of the rotating shaft 21 as a center. The wind power generation device 100 converts rotational energy of the windmill 30 into electric energy when the blade 31 receives wind to rotate the rotor 33, and the power generator 20 is driven by rotation of the rotor 33.

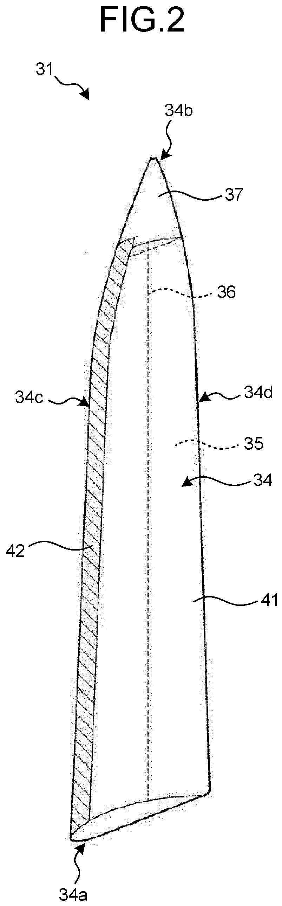

FIG. 2 is a schematic diagram illustrating a configuration of the blade 31. As illustrated in FIG. 2, the blade 31 includes a blade main body 34. The blade main body 34 includes a blade root portion 34a and a blade front end portion 34b at both ends in a blade length direction, and includes a leading edge portion 34c and a trailing edge portion 34d at both ends in a blade chord direction. The blade 31 includes a blade member 41 and a leading edge protector 42.

The blade member 41 constitutes the blade main body 34. The blade member 41 is formed by using fiber-reinforced plastics and the like such as glass fiber-reinforced plastics and carbon fiber-reinforced plastics, for example. Blade members 41 are arranged to be opposed to each other on a back side and a belly side of the blade main body 34 to form a hollow space 35, and connected to each other at the leading edge portion 34c and the trailing edge portion 34d.

A down conductor 36 is arranged in the hollow space 35 of the blade member 41. The down conductor 36 is formed by using a conductive material. The down conductor 36 constitutes at least part of an electric circuit through which a lightning current generated on the blade 31 flows when the blade 31 is struck by lightning. The down conductor 36 is arranged along the blade length direction inside the hollow space 35. One end of the down conductor 36 is connected to a chip receptor 37 arranged at the blade front end portion 34b, and the other end thereof is connected to a ground wire (not illustrated) that is disposed on the blade root portion 34a side.

The leading edge protector 42 covers a surface 41a of the blade member 41 at the leading edge portion 34c of the blade main body 34. The leading edge protector 42 covers the leading edge portion 34c to protect the leading edge portion 34c against raindrops, dust, and the like, and suppress erosion damage of the blade main body 34. The leading edge protector 42 is formed by using a metallic material such as titanium, for example.

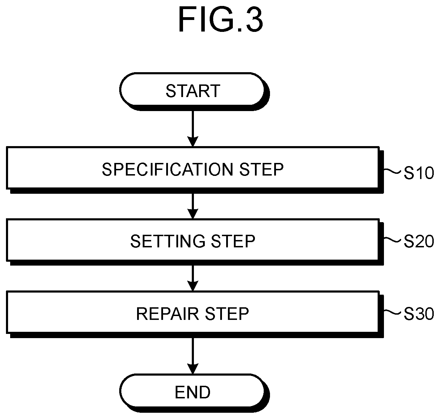

Next, the following describes a method for repairing the blade 31 described above. FIG. 3 is a flowchart illustrating an example of the method for repairing the blade 31 according to the present embodiment. The blade 31 on which the leading edge protector 42 is arranged as described above may be damaged by lightning or the like, for example. As illustrated in FIG. 3, the method for repairing the blade 31 according to the present embodiment includes a specification step (Step S10), a setting step (Step S20), and a repair step (Step S30).

At the specification step S10, a damaged part of the blade 31 is specified. At the specification step S10, a damaged part of the blade member 41 and the leading edge protector 42 of the blade 31, which is damaged, is specified. At the setting step S20, a cutting range and a repair aspect of the blade 31 are set in accordance with a damaged state of the damaged part. At the repair step S30, the blade 31 is cut and repaired based on the set cutting range and repair aspect.

At the setting step S20, for example, it is determined whether the damaged part requires a conductive function. When the blade 31 is struck by lightning, a lightning current can be caused to flow to a ground wire by causing the lightning current to flow from the leading edge protector 42 to the down conductor 36 via the chip receptor 37 (conductive function). In a case in which the leading edge protector 42 is damaged and caused to be in a state of not having a predetermined conductive function, it is difficult to cause the lightning current to flow to the down conductor 36. Due to this, in a case in which it is determined whether the damaged part requires the conductive function, and it is determined that the damaged part requires the conductive function, repair is performed with a repair aspect that can restore the conductive function as described later.

At the setting step S20, it is determined whether the damaged part requires an erosion-resistant function.

In the blade 31, the leading edge protector 42 is arranged on the leading edge portion 34c to prevent raindrops, dust, and the like from directly colliding with the leading edge portion 34c, and suppress erosion damage (erosion-resistant function). In a case in which the leading edge protector 42 is damaged and the blade member 41 as a lower layer is exposed, for example, raindrops, dust, and the like collide with the blade member 41, and the erosion-resistant function is lowered or deteriorated. Due to this, in a case in which it is determined whether the damaged part requires the erosion-resistant function, and it is determined that the damaged part requires the erosion-resistant function, repair is performed with a repair aspect that can restore the erosion-resistant function as described later. When raindrops, dust, and the like collide with the blade member 41, not only the erosion-resistant function but also aerodynamic performance may be deteriorated. On the other hand, by performing repair with a repair aspect that can restore the erosion-resistant function, the aerodynamic performance can also be restored.

At the setting step S20, it is determined whether a damaged part is present on a covered portion of the blade member 41 covered by the leading edge protector 42. In a case in which damage passes through the leading edge protector 42 and reaches the blade member 41, repair needs to be performed on both of the leading edge protector 42 and the blade member 41. Due to this, in a case in which it is determined whether a damaged part is present on the covered portion of the blade member 41, and it is determined that the damaged part is present, repair is performed with a repair aspect for both of the leading edge protector 42 and the blade member 41 as described later.

At the setting step S20, it is determined whether a damaged area of the damaged part falls within a cross-sectional area of a predetermined tack member. In the present embodiment, the predetermined tack member is a tack member used for repairing the damaged part, and includes tack members made of metal such as a screw, a bolt, a blind fastener, a pin, a rivet, a nail, and the like, for example. In a case in which the damaged area of the damaged part falls within the cross-sectional area of each of these tack members, the tack member can be fixed to the damaged part not to come off. Due to this, in a case in which it is determined whether the damaged area of the damaged part falls within the cross-sectional area of the predetermined tack member, and it is determined that the damaged area falls within the cross-sectional area of the tack member, repair is performed with a repair aspect using the tack member as described later. In a case in which it is determined that the damaged area does not fall within the cross-sectional area of the tack member, repair is performed with a repair aspect different from the tack member as described later.

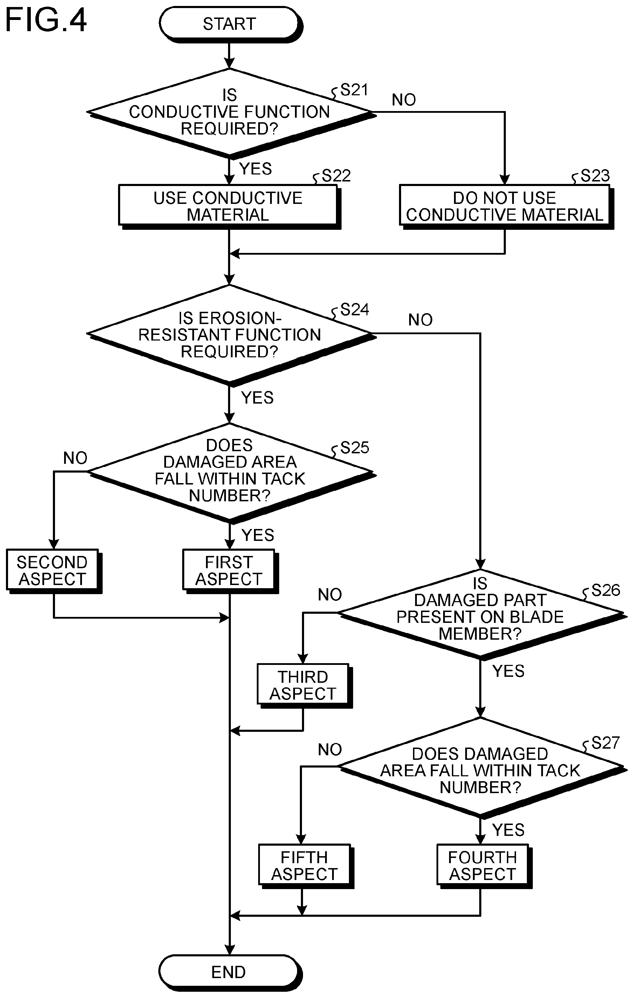

FIG. 4 is a flowchart illustrating an example of a procedure of determination for setting the repair aspect at the setting step S20. As illustrated in FIG. 4, at the setting step S20, first, it is determined whether the damaged part requires the conductive function (Step S21). If it is determined that the damaged part requires the conductive function (Yes at Step S21), a repair aspect using a filler having electrical conductivity is set (Step S22). If it is determined that the damaged part does not require the conductive function (No at Step S21), a repair aspect not using a filler having electrical conductivity is set (Step S23).

Next, it is determined whether the damaged part requires the erosion-resistant function (Step S24). If it is determined that the damaged part requires the erosion-resistant function (Yes at Step S24), it is determined whether the damaged area of the damaged part falls within the cross-sectional area of the predetermined tack member (Step S25). If it is determined that the damaged area of the damaged part falls within the cross-sectional area of the predetermined tack member (Yes at Step S25), the cutting range is set in accordance with the cross-sectional area of the tack member, and repair of inserting the tack member into a cut portion is set as a first aspect. If it is determined that the damaged area of the damaged part does not fall within the cross-sectional area of the predetermined tack member (No at Step S25), a range including the damaged part is set as the cutting range, and repair of filling the cut portion with a filler and arranging a metal layer on a surface of the filler is set as a second aspect. In the second aspect, different methods can be set depending on the damaged area. The second aspect will be described later.

On the other hand, if it is determined that the damaged part does not require the erosion-resistant function at Step S24 (No at Step S24), it is determined whether a damaged part is present on the covered portion of the blade member 41 (Step S26). If it is determined that the damaged part is not present on the covered portion of the blade member 41 (No at Step S26), a portion including the damaged part of the leading edge protector 42 is set as the cutting range, and repair of filling the cut portion with a filler is set as a third aspect. The third aspect will be described later. If it is determined that the damaged part is present on the covered portion of the blade member 41 (Yes at Step S26), it is determined whether the damaged area of the damaged part falls within the cross-sectional area of the predetermined tack member (Step S27). If it is determined that the damaged area of the damaged part falls within the cross-sectional area of the predetermined tack member (Yes at Step S27), the cutting range is set in accordance with the cross-sectional area of the tack member, and repair of inserting the tack member into the cut portion is set as a fourth aspect. The fourth aspect will be described later. If it is determined that the damaged area of the damaged part does not fall within the cross-sectional area of the predetermined tack member (No at Step S27), a range including damaged portions of the leading edge protector 42 and the blade member 41 is set as the cutting range, and repair of filling the cut portion with fiber-reinforced plastics is set as a fifth aspect. In the fifth aspect, different methods can be set depending on the damaged area. The fifth aspect will be described later.

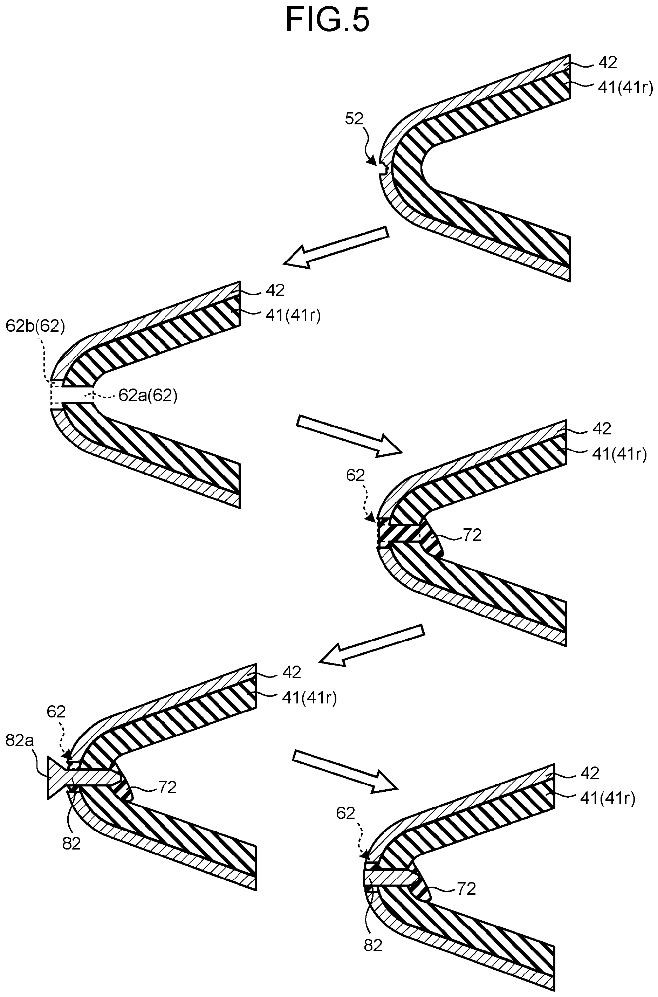

Next, the following describes the first aspect. The first aspect is a repair aspect in a case in which the damaged part requires the erosion-resistant function, and the damaged area of the damaged part falls within the cross-sectional area of the predetermined tack member. FIG. 5 is a diagram illustrating an example (first aspect) of the repair aspect. As illustrated in FIG. 5, the first aspect is a repair aspect in a case in which a damaged part 52 is present on the leading edge protector 42 of the blade 31, for example.

In the first aspect, a cutting range 62 including the damaged part 52 of the leading edge protector 42 is set. The cutting range 62 is a range including both of a cutting range 62a and a cutting range 62b. The cutting range 62a is a cylindrical range having a diameter corresponding to the cross-sectional area of the tack member to be used. The cutting range 62a is set to pass through the leading edge protector 42 and a covered portion 41r of the blade member 41. The cutting range 62b is set to be a range obtained by expanding a diameter on the leading edge protector 42 side with respect to the cutting range 62a. In a case of actually performing repair, the entire cutting range 62 can be cut by cutting the cutting range 62b after cutting the cutting range 62a. After setting the cutting range 62, an aspect of inserting a tack member (penetrating member) 82 into the cut portion is set. Before inserting the tack member 82, a filler 72 such as resin is poured into the cut portion to be arranged at a front end portion in an insertion direction of the tack member 82 while being supported by the blade member 41. By inserting the tack member 82 in this state, the tack member 82 is arranged to pass through the blade member 41 and the leading edge protector 42, and the front end of the tack member 82 is buried in the filler 72. When the filler 72 is solidified, the tack member 82 is held by the filler 72, and the tack member 82 is prevented from coming off. After inserting the tack member 82, the tack member 82 may be shaped to smoothen the surface of the leading edge protector 42. For example, by cutting off a head portion 82a of the tack member 82, it is possible to smoothen the surface of the leading edge protector 42 including a cut surface of the tack member 82 from which the head portion 82a is cut off.

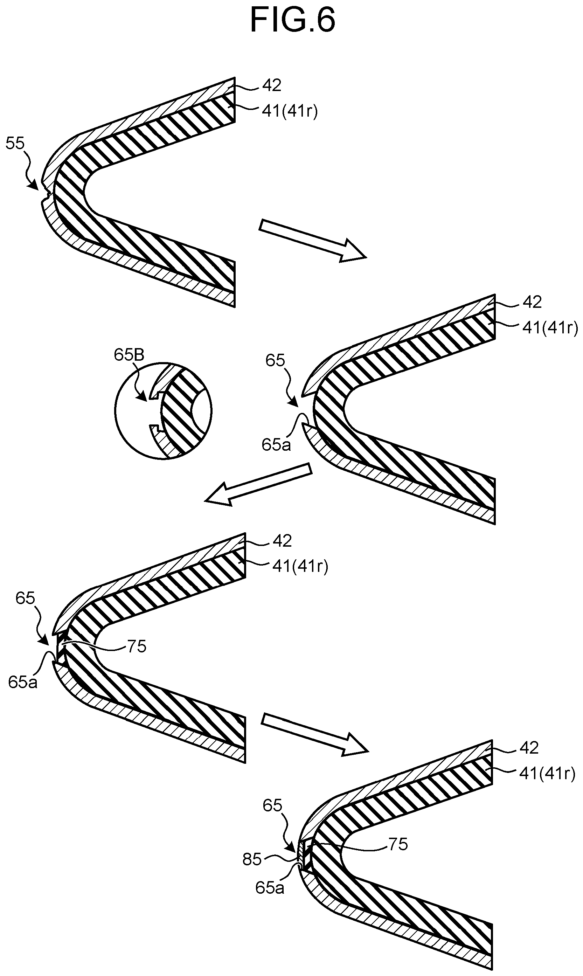

Next, the following describes the second aspect. The second aspect is a repair aspect in a case in which the damaged part requires the erosion-resistant function, and the damaged area of the damaged part does not fall within the cross-sectional area of the predetermined tack member. FIG. 6 is a diagram illustrating an example (second aspect) of the repair aspect. As illustrated in FIG. 6, first, a cutting range 65 including a damaged part 55 of the leading edge protector 42 is set. At this point, the cutting range 65 can be set so that a cut surface 65a of the leading edge protector 42 has a shape that is wider on the blade member 41 side than the surface side in a depth direction. As such a shape, for example, exemplified are a tapered shape expanding from the surface side in the depth direction toward the blade member 41 side, a stepped shape expanding from the surface side in the depth direction toward the blade member 41 side in a stepwise manner (refer to a cutting range 65B in FIG. 6), or the like. After setting the cutting range 65, set is an aspect of filling the cut portion with a filler 75 using material such as resin and arranging a metal layer 85 on a surface of the filler 75. The metal layer 85 may be formed by thermal spraying or a plating method, for example. Alternatively, the metal layer 85 may be formed by causing the filler 75 to be in a molten state at the time of filling, and attaching a thin film. As a metallic material used for the metal layer 85, titanium or the like are exemplified, for example. The cutting range 65 is set so that the cut surface 65a has the tapered shape as described above, so that the filler 75 can be prevented from falling off to the surface side of the leading edge protector 42 when the filler 75 is filled. In a case in which the surface of the formed metal layer 85 projects from the leading edge protector 42, a projecting portion on the surface of the metal layer 85 may be cut off to smoothen the surface of the leading edge protector 42.

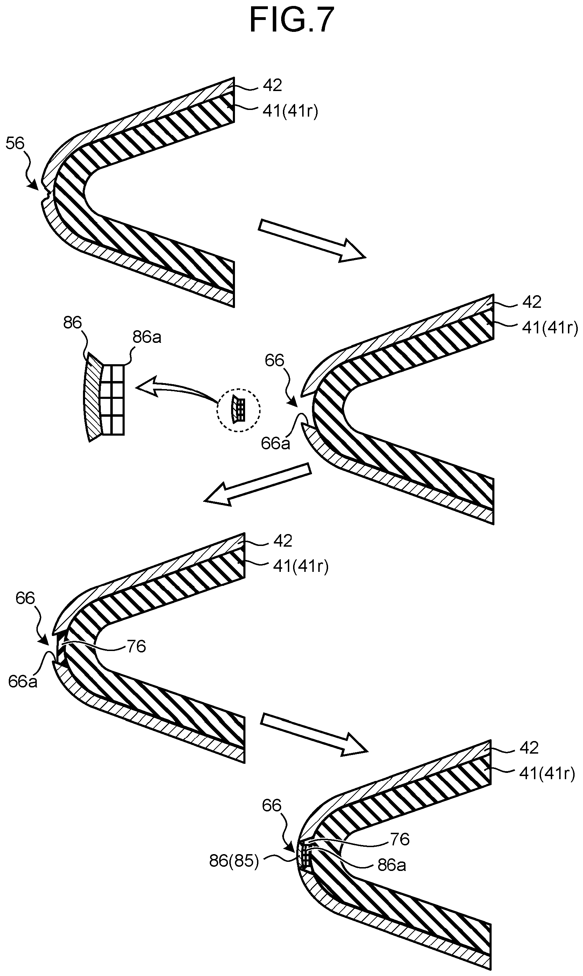

FIG. 7 is a diagram illustrating another example (second aspect) of the repair aspect. The example illustrated in FIG. 7 is a repair aspect in which a metal member 86 including a net-like portion 86a to be buried in the filler 75 is arranged on the surface of the filler 75 to cause the metal member 86 to be the metal layer 85. First, a cutting range 66 including a damaged part 56 of the leading edge protector 42 is set. At this point, the cutting range 66 can be set so that a cut surface 66a of the leading edge protector 42 has a shape that is wider on the blade member 41 side than the surface side in a depth direction. As such a shape, for example, exemplified are a tapered shape expanding from the surface side in the depth direction toward the blade member 41 side (refer to FIG. 7), a stepped shape expanding from the surface side in the depth direction toward the blade member 41 side in a stepwise manner, or the like. After setting the cutting range 66, the cut portion is filled with a filler 76 using material such as resin, and the metal member 86 is arranged to bury the net-like portion 86a in the filler 76 before the filler 76 is solidified. When the filler 76 is solidified in this state, the filler 76 can be engaged with the net-like portion 86a, and the metal member 86 can be prevented from coming off. Additionally, the cut surface 66a of the leading edge protector 42 has a shape that is wider on the blade member 41 side than the surface side in the depth direction, so that the filler 76 can be prevented from peeling off.

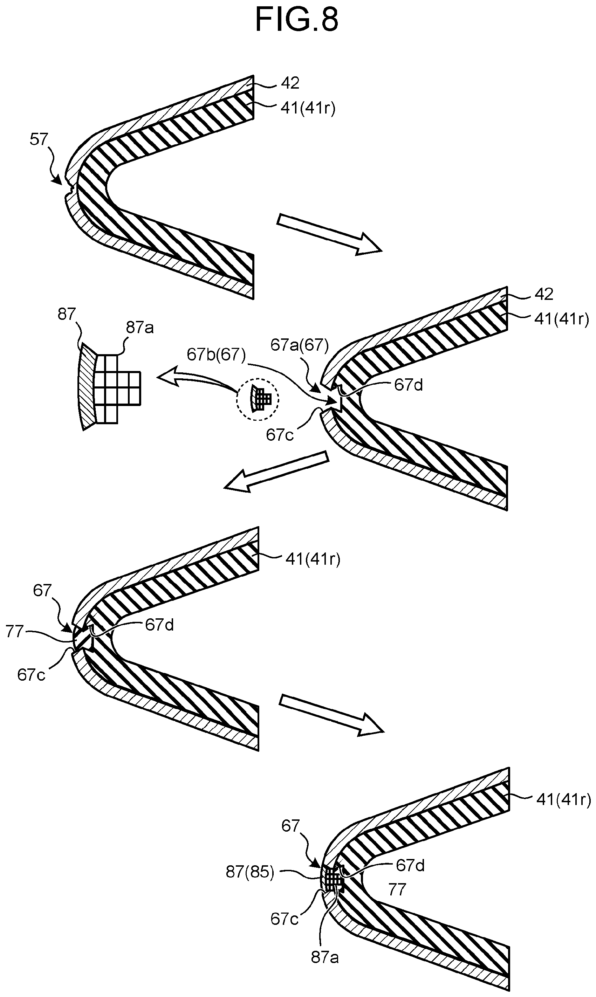

FIG. 8 is a diagram illustrating another example (second aspect) of the repair aspect. The example illustrated in FIG. 8 is a repair aspect in which a metal member 87 including a net-like portion 87a to be buried in the filler 75 is arranged on a surface of a filler 77 to cause the metal member 87 to be the metal layer 85. First, a cutting range 67 including a damaged part 57 of the leading edge protector 42 is set. The cutting range 67 is a range including both of a cutting range 67a and a cutting range 67b. The cutting range 67 can be set so that, regarding the cutting range 67a, a cut surface 67c of the leading edge protector 42 has a shape that is wider on the blade member 41 side than the surface side in the depth direction. As such a shape, for example, exemplified are a tapered shape expanding from the surface side in the depth direction toward the blade member 41 side (refer to FIG. 8), a stepped shape expanding from the surface side in the depth direction toward the blade member 41 side in a stepwise manner, or the like. The cutting range 67b is set so that a cut surface 67d of the blade member 41 has a tapered shape expanding from the leading edge protector 42 side in the depth direction toward a bottom side. After setting the cutting range 67, the cut portion is filled with the filler 77 using material such as resin, and the metal member 87 is arranged to bury the net-like portion 87a in the filler 77 before the filler 77 is solidified. When the filler 77 is solidified in this state, the filler 77 can be engaged with the net-like portion 87a, and the metal member 87 can be prevented from coming off. Additionally, the cut surface 67d of the blade member 41 has a tapered shape expanding from the leading edge protector 42 side in the depth direction toward the bottom side, so that the filler 77 can be prevented from peeling off. Furthermore, the cut surface 67c of the leading edge protector 42 has a tapered shape expanding from the blade member 41 side in the depth direction toward the surface side of the leading edge protector 42, so that the cut surface 67c of the leading edge protector 42 on a lower layer side is exposed in a case in which the metal member 87 is worn, and an erosion-resistant property can be secured. In a case in which the surface of the arranged metal member 87 projects from the leading edge protector 42, a projecting portion on the surface of the metal member 87 may be cut off to smoothen the surface of the leading edge protector 42.

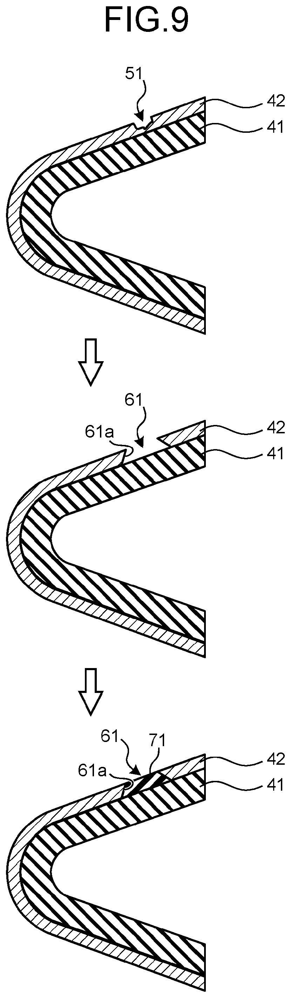

Next, the following describes the third aspect. The third aspect is a repair aspect in a case in which the damaged part does not require the erosion-resistant function, and the blade member 41 is not damaged. FIG. 9 is a diagram illustrating an example (third aspect) of the repair aspect. As illustrated in FIG. 9, first, a cutting range 61 including a damaged part 51 of the leading edge protector 42 is set. At this point, the cutting range 61 can be set so that a cut surface 61a of the leading edge protector 42 has a shape that is wider on the blade member 41 side than the surface side in a depth direction. As such a shape, for example, exemplified are a tapered shape expanding from the surface side in the depth direction toward the blade member 41 side (refer to FIG. 9), a stepped shape expanding from the surface side in the depth direction toward the blade member 41 side in a stepwise manner, or the like. After setting the cutting range 61, set is an aspect of filling the cut portion with a filler 71 using material such as resin. The cutting range 61 is set so that the cut surface 61a has a tapered shape as described above, so that the filler 71 can be prevented from falling off to the surface side of the leading edge protector 42 when the filler 71 is filled.

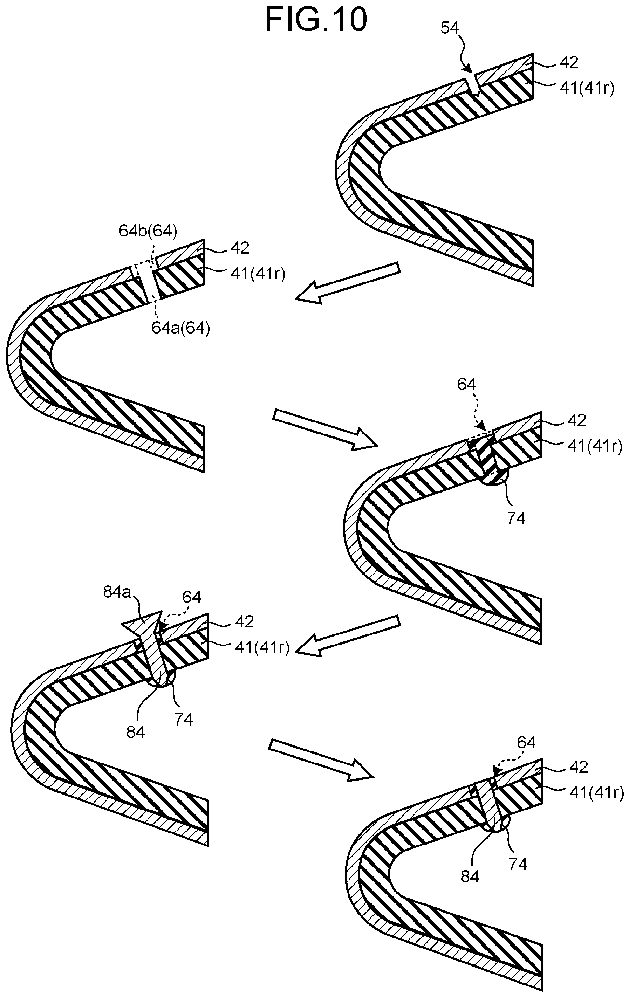

Next, the following describes the fourth aspect. The fourth aspect is a repair aspect in a case in which the damaged part does not require the erosion-resistant function, the damaged part is present on the leading edge protector 42 and the covered portion 41r of the blade member 41, and the damaged area of the damaged part falls within the cross-sectional area of the predetermined tack member. FIG. 10 is a diagram illustrating an example (the fourth aspect and the first aspect) of the repair aspect. In the fourth aspect, a cutting range 64 including a damaged part 54 of the leading edge protector 42 and the covered portion 41r is set. The cutting range 64 is a range including both of a cutting range 64a and a cutting range 64b. The cutting range 64a is a cylindrical range having a diameter corresponding to the cross-sectional area of the tack member to be used. The cutting range 64a is set to pass through the leading edge protector 42 and a covered portion 41r of the blade member 41. The cutting range 64b is set to be a range obtained by expanding a diameter on the leading edge protector 42 side with respect to the cutting range 64a. The cutting range 64 is the same range as the cutting range 62 described above. After setting the cutting range 64, similar to the first aspect, set is an aspect of inserting a tack member (penetrating member) 84 into the cut portion to pass through the leading edge protector 42 and the blade member 41. Before inserting the tack member 84, a filler 74 such as resin may be poured into the cut portion to be arranged to hold a front end portion in the insertion direction of the tack member 84 while being supported by the blade member 41, or the tack member 84 may be shaped to smoothen the surface of the leading edge protector 42 after the tack member 84 is inserted. For example, by cutting off a head portion 84a of the tack member 84, it is possible to smoothen the surface of the leading edge protector 42 including a cut surface of the tack member 84 from which the head portion 84a is cut off.

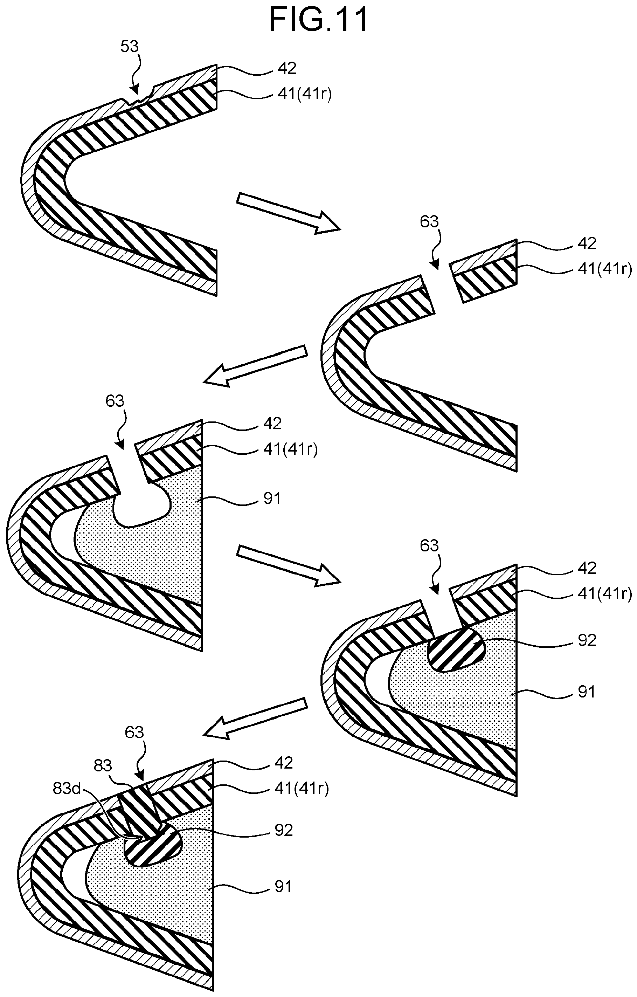

Next, the following describes the fifth aspect. The fifth aspect is a repair aspect in a case in which the damaged part does not require the erosion-resistant function, the damaged part is present on the leading edge protector 42 and the covered portion 41r of the blade member 41, and the damaged area of the damaged part does not fall within the cross-sectional area of the predetermined tack member. FIG. 11 is a diagram illustrating an example (fifth aspect) of the repair aspect. The example illustrated in FIG. 11 can be applied to a case in which a cutting range 63 (described later) can be formed by using a typical hole saw or the like.

In the fifth aspect, the cutting range 63 including a damaged part 53 of the leading edge protector 42 and the covered portion 41r of the blade member 41 is set. The cutting range 63 is a cylindrical range including the damaged part 53. The cutting range 63 is set to pass through the leading edge protector 42 and the covered portion 41r of the blade member 41. After setting the cutting range 63, set is an aspect of inserting, into the cut portion, an insertion member (penetrating member) 83 that is formed by using fiber-reinforced plastics. The insertion member 83 is formed to have dimensions to pass through the cut portion and project to an inner part of the blade member 41, for example. A stepped portion 83d is formed on a portion of the insertion member 83 projecting to the inner part of the blade main body 34. In the fifth aspect, a foam material 91 is poured into the inner part of the blade main body 34 from the cut portion before inserting the insertion member 83, and a filler 92 such as resin is arranged on the foam material 91 around the cut portion to be in contact with the insertion member 83 and supported by the blade member 41. By inserting the insertion member 83 in this state, the stepped portion 83d of the insertion member 83 is buried in the filler 92. When the filler 92 is solidified, the insertion member 83 is held by the filler 92, and the insertion member 83 is prevented from coming off. By polishing the surface of the insertion member 83 after inserting the insertion member 83, the surface of the leading edge protector 42 including the surface of the insertion member 83 can be smoothened.

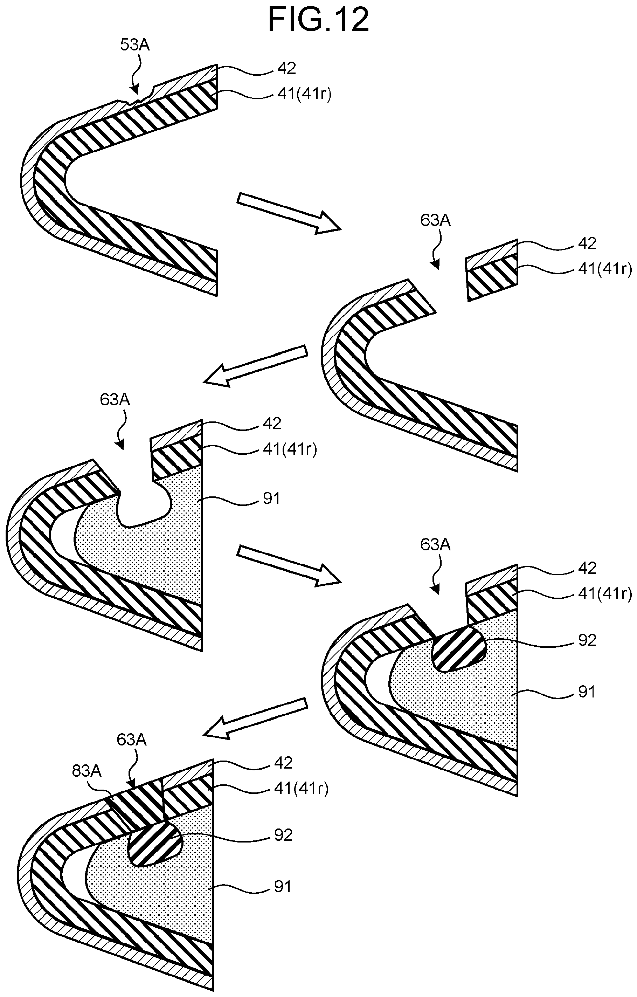

FIG. 12 is a diagram illustrating another example (fifth aspect) of the repair aspect. The example illustrated in FIG. 12 can be applied to a case in which a damaged area of a damaged part 53A is so large that the cutting range cannot be formed by using a typical hole saw or the like. In the example illustrated in FIG. 12, set is a cutting range 63A that can be formed by using a cutting tool and the like different from a typical hole saw. As the cutting range 63A, for example, a range having a tapered shape can be set, the range passing through the leading edge protector 42 and the covered portion 41r of the blade member 41 and having a diameter that is gradually reduced from the surface side of the leading edge protector 42 toward the inner part side of the blade main body 34. After setting the cutting range 63A, set is an aspect of arranging, on the cut portion, an insertion member 83A formed by using fiber-reinforced plastics. In this case, a foam material 91 is poured into the inner part of the blade main body 34 from the cut portion before arranging the insertion member 83A, and a filler 92 such as resin is arranged on the foam material 91 around the cut portion to be in contact with the insertion member 83A and supported by the blade member 41. In this case, for example, the insertion member 83A can be formed by pouring fiber-reinforced plastics in a molten state to be cured. After curing the insertion member 83A, the surface is polished to be smoothened. In this case, by polishing the surface of the insertion member 83A, the surface of the leading edge protector 42 including the surface of the insertion member 83A can be smoothened.

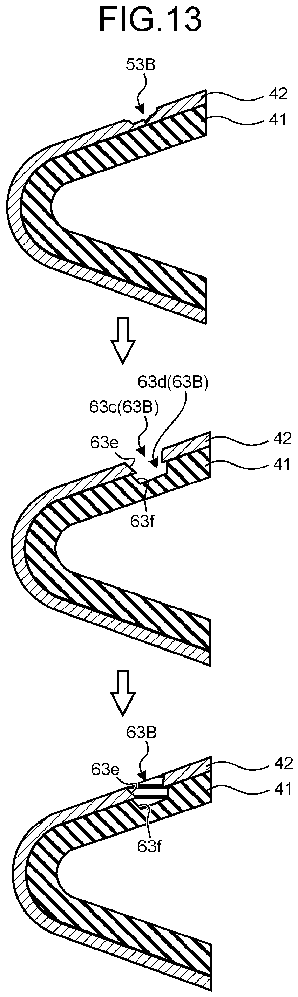

FIG. 13 is a diagram illustrating another example (fifth aspect) of the repair aspect. The example illustrated in FIG. 13 can be applied to a case in which a damaged area of the damaged part 53B does not fall within the cross-sectional area of the predetermined tack member in the fifth aspect. In the example illustrated in FIG. 13, a cutting range 63B including the damaged part 53B of the leading edge protector 42 and the covered portion 41r of the blade member 41 is set. The cutting range 63B is a range including both of a cutting range 63c and a cutting range 63d. The cutting range 63c is set so that a cut surface 63e of the leading edge protector 42 has a tapered shape expanding from the blade member 41 side toward the surface side of the leading edge protector 42. The cutting range 63d is set so that a cut surface 63f of the blade member 41 has a tapered shape expanding from the bottom side in the depth direction toward the leading edge protector 42 side. After setting the cutting range 63B, set is an aspect of filling the cut portion with a filler 73 using material such as resin. The cutting range 61 is set so that the cut surface 63e has the tapered shape as described above, so that the cut surface 63e of the leading edge protector 42 is exposed even in a case in which part of the filler 73 peels off, and the erosion-resistant property is secured. The repair aspect illustrated in FIG. 13 may be set as the third aspect instead of the aspect illustrated in FIG. 5. At the repair step S30, the cutting range is cut in accordance with the third aspect to the second aspect set as described above, and the cut portion is repaired.

As described above, the method for repairing the blade 31 according to the present embodiment includes a specification step of specifying the damaged part of the blade 31 including the blade member 41 forming the blade main body 34 and the leading edge protector 42 that covers the surface of the blade member 41 at the leading edge portion 34c of the blade main body 34, the setting step of setting the cutting range and the repair aspect of the blade 31 in accordance with the damaged state of the damaged part, and the repair step of cutting and repairing the blade 31 based on the set cutting range and repair aspect.

With this configuration, the damaged part of the blade 31 is specified, and the cutting range and the repair aspect of the blade 31 are set in accordance with the damaged state of the damaged part, so that, in a case in which the blade 31 in which the leading edge protector 42 covers the surface of the blade member 41 is damaged, the damage can be appropriately repaired.

In the method for repairing the blade 31 according to the present embodiment, at the setting step, it is determined whether the damaged part requires the conductive function, and if it is determined that the damaged part requires the conductive function at the specification step, repair using a filler having electrical conductivity is set as the repair aspect. Thus, in a case in which the damaged part requires the conductive function, the conductive function can be appropriately restored.

In the method for repairing the blade 31 according to the present embodiment, at the setting step, it is determined whether the damaged area of the damaged part falls within the cross-sectional area of the predetermined tack member 82, and if it is determined that the area of the damaged part falls within the cross-sectional area, the cutting range is set in accordance with the cross-sectional area of the tack member 82, and repair of inserting the tack member 82 into the cut portion is set as the repair aspect. Thus, in a case in which the area of the damaged part falls within the cross-sectional area, the damaged part can be easily repaired by inserting the tack member 82 into the cut portion.

In the method for repairing the blade 31 according to the present embodiment, the repair of inserting the tack member 82 includes arranging the filler 72 at the front end portion in the insertion direction of the tack member 82. Thus, the filler 72 can be engaged with the front end portion of the tack member 82, so that the tack member 82 can be prevented from coming off.

In the method for repairing the blade 31 according to the present embodiment, the repair of inserting the tack member 82 includes removing part of the portion of the tack member 82 exposed to the leading edge protector 42 after inserting the tack member 82. Thus, a boundary between the tack member 82 and the leading edge protector 42 can be smoothened.

In the method for repairing the blade 31 according to the present embodiment, at the setting step, it is determined whether the damaged part is present on the covered portion 41r of the blade member 41 covered by the leading edge protector 42, a portion including the damaged part of the leading edge protector 42 is set as the cutting range if it is determined that the damaged part is not present on the covered portion 41r, a portion including the damaged part of the leading edge protector 42 and the blade member 41 is set as the cutting range if it is determined that the damaged part is present on the covered portion 41r, and the repair of filling the cut portion with a filler is set as the repair aspect. Thus, in both of the case in which the damaged part of the covered portion 41r of the blade member 41 is present and the case in which the damaged part thereof is not present, the damaged part can be easily and appropriately repaired by filling the cut portion with the filler.

In the method for repairing the blade 31 according to the present embodiment, at the setting step, the cutting range is set so that the cut surface of the leading edge protector 42 has a shape that is wider on the blade member 41 side than the surface side in the depth direction. Thus, the cut surface has a shape expanding from the surface side in the depth direction toward the blade member 41 side, so that the filler can be prevented from coming off.

In the method for repairing the blade 31 according to the present embodiment, at the setting step, the cutting range is set so that the cut surface of the leading edge protector 42 has a shape that is wider on the surface side than the blade member 41 side in the depth direction. Thus, the cut surface of the leading edge protector 42 has a shape expanding from the blade member 41 side in the depth direction toward the surface side, so that the cut surface of the leading edge protector 42 on the lower layer side can be exposed in a case in which the filler peels off or is worn. Due to this, the erosion-resistant function can be secured.

In the method for repairing the blade 31 according to the present embodiment, at the setting step, in a case in which the cutting range includes the covered portion 41r, the cutting range is set so that the cutting range of an end face on the leading edge protector 42 side of the covered portion 41r is larger than the cutting range of an end face on the blade member 41 side of the leading edge protector 42. Thus, the filler filled in the covered portion 41r is engaged with the leading edge protector 42, so that the filler can be prevented from coming off.

In the method for repairing the blade 31 according to the present embodiment, at the setting step, it is determined whether the damaged part requires the erosion-resistant function, and if it is determined that the damaged part requires the erosion-resistant function, the range including the damaged part of the blade 31 is set as the cutting range, and the repair of filling the cut portion with the filler and arranging the metal layer on the surface of the filler is set as the repair aspect. Thus, the damaged part can be appropriately repaired so that the erosion-resistant function is restored.

In the method for repairing the blade 31 according to the present embodiment, at the setting step, the repair aspect is set so that the metal layer is formed by plating, thermal spraying, or adhesion of metal foil. Thus, the damaged part can be easily repaired so that the erosion-resistant function is restored.

In the method for repairing the blade 31 according to the present embodiment, at the setting step, the repair aspect is set so that the metal member including the net-like portion to be buried in the filler is arranged on the surface of the filler to cause the metal member to be the metal layer. Thus, the damaged part can be easily repaired so that the erosion-resistant function is restored while preventing the metal layer from peeling off or falling off.

In the method for repairing the blade 31 according to the present embodiment, at the setting step, the cutting range is set so that the cut surface of the leading edge protector 42 has a shape that is wider on the blade member 41 side than the surface side in the depth direction. Thus, the cut surface of the leading edge protector 42 has a tapered shape expanding from the blade member 41 side in the depth direction toward the surface side, so that the cut surface of the leading edge protector 42 on the lower layer side can be exposed in a case in which the metal member peels off or is worn. Due to this, the erosion-resistant function can be secured.

In the method for repairing the blade 31 according to the present embodiment, at the setting step, it is determined whether the damaged part requires the erosion-resistant function. If it is determined that the damaged part does not require the erosion-resistant function, it is determined whether the damaged part is present on the blade member 41. If it is determined that the damaged part is present on the blade member 41, it is determined whether the damaged area of the damaged part falls within the cross-sectional area of the predetermined tack member 82. If it is determined that the area of the damaged part does not fall within the cross-sectional area, a range including the damaged portion is set as the cutting range, and repair of inserting the insertion members 83 and 83A formed by using fiber-reinforced plastics into the cut portion is set as the repair aspect. Thus, the damaged part of the blade member 41 can be easily and appropriately repaired.

In the method for repairing the blade 31 according to the present embodiment, the blade main body 34 has a hollow shape, the cutting range is set at a portion passing through the leading edge protector 42 and the blade member 41 at the setting step, and the repair aspect includes arranging the filler 92 inside the blade main body 34 to be brought into contact with the insertion members 83 and 83A before inserting the insertion members 83 and 83A. Thus, the insertion members 83 and 83A can be prevented from coming off.

The blade 31 according to the present embodiment includes the blade member 41 having a hollow shape that forms the blade main body 34, the leading edge protector 42 that covers the surface of the blade member 41 at the leading edge portion 34c of the blade main body 34, the penetrating member (the tack members 82 and 84, the insertion members 83 and 83A) arranged to pass through the leading edge protector 42 and the blade member 41, and the fillers 72, 74, and 92 arranged to be brought into contact with the penetrating member in at least a portion having a hollow shape of the blade main body 34. With this configuration, the blade 31 that is appropriately repaired with the penetrating member can be obtained. Additionally, the fillers 72, 74, and 92 can prevent the penetrating member from coming off.

In the blade 31 according to the present embodiment, the penetrating member is each of the tack members 82 and 84 formed to smoothen the surface of the leading edge protector 42. With this configuration, the blade 31 that is appropriately repaired with the tack members 82 and 84 can be obtained.

In the blade 31 according to the present embodiment, the penetrating member is each of the insertion members 83 and 83A that is formed by using fiber-reinforced plastics to smoothen the surface of the leading edge protector 42. With this configuration, the blade 31 that is appropriately repaired with the insertion members 83 and 83A can be obtained.

In the blade 31 according to the present embodiment, the filler 92 is arranged so that part of the insertion member 83 is buried therein, and the insertion member 83 includes the stepped portion 83d at the portion to be buried in the filler 92. With this configuration, the stepped portion 83d is engaged with the filler 92, so that the insertion member 83 can be prevented from coming off.

The scope of protection sought is defined by the appended claims. For example, the blade 31 used for the wind power generation device 100 is exemplified in the embodiments described above. The description of the non claimed examples described above can also be applied to other blades such as a blade of an aircraft or a blade used for a propeller of a helicopter (rotor blade), for example, a turbine blade of an engine, a gas turbine, or a steam turbine, a blade used for a blower and the like in a power generation plant, a chemical plant, and the like.

### Reference Signs List

10 TOWER
20 POWER GENERATOR
21 ROTATING SHAFT
30 WINDMILL
31 BLADE
32 HUB
33 ROTOR
34 BLADE MAIN BODY
34a BLADE ROOT PORTION
34b BLADE FRONT END PORTION
34c LEADING EDGE PORTION
34d TRAILING EDGE PORTION
35 HOLLOW SPACE
36 DOWN CONDUCTOR
37 CHIP RECEPTOR
41 BLADE MEMBER
41a SURFACE
41r COVERED PORTION
42 LEADING EDGE PROTECTOR
51, 52, 53, 53B, 54, 55, 56, 57 DAMAGED PART
61, 62, 62a, 62b, 63, 63A, 63B, 63c, 63d, 64, 64a, 64b, 65, 65c, 65d, 66, 67, 67a, 67b CUTTING RANGE
61a, 63e, 63f, 66a, 67c, 67d CUT SURFACE
71, 72, 73, 74, 75, 76, 77, 92 FILLER
82, 84 TACK MEMBER
82a, 84a HEAD PORTION
83, 83A INSERTION MEMBER
83d STEPPED PORTION
85 METAL LAYER
86, 87 METAL MEMBER
86a, 87a NET-LIKE PORTION
91 FOAM MATERIAL
100 WIND POWER GENERATION DEVICE

## Claims

1. A method for repairing a blade (31), the method comprising:
a specification step of specifying a damaged part (51, 52, 53, 53B, 54, 55, 56, 57) of the blade (31), the blade (31) having a blade member that forms a blade main body (34), and a leading edge protector (42) that covers a surface of the blade member at a leading edge portion of the blade main body (34);
a setting step of setting a cutting range and a repair aspect for the blade (31) in accordance with a damaged state of the damaged part (51, 52, 53, 53B, 54, 55, 56, 57); and
a repair step of cutting and repairing the blade (31) based on the set cutting range and repair aspect,
wherein the setting step includes
determining whether the damaged part (51, 52, 53, 53B, 54, 55, 56, 57) requires a conductive function, and
setting, if it is determined that the damaged part (51, 52, 53, 53B, 54, 55, 56, 57) requires the conductive function, repair using a filler (71, 72, 73, 74, 75, 76, 77, 92) having electrical conductivity as the repair aspect,
wherein the setting step includes
determining whether a damaged area of the damaged part (51, 52, 53, 53B, 54, 55, 56, 57) falls within a cross-sectional area of a predetermined tack member (82, 84), and
setting, if it is determined that the area of the damaged part (51, 52, 53, 53B, 54, 55, 56, 57) falls within the cross-sectional area, the cutting range penetrating the blade main body (34) and the leading edge protector (42) is set in accordance with the cross-sectional area of the tack member (82, 84), and repair of inserting the tack member (82, 84) into a cut portion as the repair aspect,
**characterized in that** the repair of inserting the tack member (82, 84) includes arranging a filler (71, 72, 73, 74, 75, 76, 77, 92) at a front end portion in an insertion direction of the tack member (82, 84) of the penetrating portion in the cutting range, the tack member (82, 84) is inserted into the region where the filler (71, 72, 73, 74, 75, 76, 77, 92) is inserted, and removing part of a portion of the tack member (82, 84) exposed to the leading edge protector (42) after inserting the tack member (82,84).

2. The method for repairing the blade (31) according to claim 1, wherein the setting step includes
determining whether the damaged part (51, 52, 53, 53B, 54, 55, 56, 57) is present on a covered portion of the blade member that is covered by the leading edge protector (42),
setting, if it is determined that the damaged part (51, 52, 53, 53B, 54, 55, 56, 57) is not present on the covered portion, a portion including the damaged part of the leading edge protector (42) as the cutting range,
setting, if it is determined that the damaged part (51, 52, 53, 53B, 54, 55, 56, 57) is present on the covered portion, a portion including the damaged part of the leading edge protector (42) and the blade member as the cutting range, and
setting repair of filling a cut portion with a filler (71, 72, 73, 74, 75, 76, 77, 92) as the repair aspect.

3. The method for repairing the blade (31) according to claim 2, wherein the setting step includes setting the cutting range so that a cut surface of the leading edge protector (42) has a shape that is wider on the blade member side than a surface side in a depth direction.

4. The method for repairing the blade (31) according to claim 2, wherein the setting step includes setting the cutting range so that a cut surface of the leading edge protector (42) has a shape that is wider on a surface side than the blade member side in a depth direction.

5. The method for repairing the blade (31) according to claim 4, wherein the setting step includes, in a case in which the cutting range includes the covered portion, setting the cutting range so that the cutting range of an end face on the leading edge protector side of the covered portion is larger than the cutting range of an end face on the blade member side of the leading edge protector.

6. The method for repairing the blade (31) according to any one of claims 1 to 5, wherein the setting step includes
determining whether the damaged part (51, 52, 53, 53B, 54, 55, 56, 57) requires an erosion-resistant function, and
setting, if it is determined that the damaged part (51, 52, 53, 53B, 54, 55, 56, 57) requires the erosion-resistant function, a range including the damaged part of the blade (31) as the cutting range, and repair of filling a cut portion with a filler (71, 72, 73, 74, 75, 76, 77, 92) and arranging a metal layer (85) on a surface of the filler (71, 72, 73, 74, 75, 76, 77, 92) as the repair aspect.

7. The method for repairing the blade (31) according to claim 6, wherein the setting step includes setting the repair aspect so that the metal layer (85) is formed by plating, thermal spraying, or adhesion of metal foil.

8. The method for repairing the blade (31) according to claim 6, wherein the setting step includes setting the repair aspect so that a metal member (86,87) including a net-like portion to be buried in the filler (71, 72, 73, 74, 75, 76, 77, 92) is arranged on a surface of the filler to cause the metal member (86,87) to be the metal layer.

9. The method for repairing the blade (31) according to claim 8, wherein the setting step includes setting the cutting range so that a cut surface of the leading edge protector (42) has a shape that is wider on the blade member side than a surface side in a depth direction.

10. The method for repairing the blade (31) according to any one of claims 1 to 9, wherein the setting step includes
determining whether the damaged part (51, 52, 53, 53B, 54, 55, 56, 57) requires an erosion-resistant function,
determining, if it is determined that the damaged part (51, 52, 53, 53B, 54, 55, 56, 57) does not require the erosion-resistant function, whether the damaged part is present on the blade member,
determining, if it is determined that the damaged part (51, 52, 53, 53B, 54, 55, 56, 57) is present on the blade member, whether a damaged area of the damaged part (51, 52, 53, 53B, 54, 55, 56, 57) falls within a cross-sectional area of a predetermined tack member (82, 84), and
setting, if it is determined that the area of the damaged part (51, 52, 53, 53B, 54, 55, 56, 57) does not fall within the cross-sectional area, a range including the damaged part (51, 52, 53, 53B, 54, 55, 56, 57) as the cutting range, and repair of inserting an insertion member (71, 72, 73, 74, 75, 76, 77, 92) formed by using fiber-reinforced plastics into a cut portion as the repair aspect.

11. The method for repairing the blade (31) according to claim 10, wherein
the blade main body (34) has a hollow shape, and
the setting step includes setting the cutting range at a portion passing through the leading edge protector (42) and the blade member, and the repair aspect includes arranging a filler inside a blade main body (34) to be brought into contact with the insertion member (71, 72, 73, 74, 75, 76, 77, 92) before inserting the insertion member.

12. A blade (31) comprising:
a blade member having a hollow shape that forms a blade main body (34);
a leading edge protector (42) that covers a surface of the blade member at a leading edge portion of the blade main body (34);
a penetrating member that is arranged to pass through the leading edge protector (42) and the blade member; and
a filler (71, 72, 73, 74, 75, 76, 77, 92) that is arranged in at least a portion having a hollow shape of the blade main body (34) to hold the penetrating member while being supported by the blade member,
**characterized in that** the penetrating member is a tack member (82, 84) that is formed to smoothen a surface of the leading edge protector (42) and removed part of a portion of the tack member (82, 84) exposed to the leading edge protector,
wherein the filler (71, 72, 73, 74, 75, 76, 77, 92) is filled between the tack member, the leading edge protector, and the blade member.

## Patentansprüche

1. Verfahren zum Reparieren eines Blattes (31), wobei das Verfahren umfasst:
einen Spezifikationsschritt des Spezifizierens eines beschädigten Teils (51, 52, 53, 53B, 54, 55, 56, 57) des Blattes (31), wobei das Blatt (31) ein Blattglied, das einen Blatthauptkörper (34) bildet, und einen Führungs- bzw.
Vorderkantenschutz (42) aufweist, der eine Fläche bzw. Oberfläche des Blattglieds an einem Führungs- bzw. Vorderkantenabschnitt des Blatthauptkörpers (34) abdeckt;
einen Festlegungsschritt des Festlegens eines Schneidbereichs und eines Reparaturaspekts für das Blatt (31) gemäß einem beschädigten Zustand bzw. Beschädigungszustand des beschädigten Teils (51, 52, 53, 53B, 54, 55, 56, 57); und
einen Reparaturschritt des Schneidens und Reparierens des Blattes (31) basierend auf dem festgelegten Schneidbereich und Reparaturaspekt, wobei der Festlegungsschritt beinhaltet
Bestimmen, ob der beschädigte Teil (51, 52, 53, 53B, 54, 55, 56, 57) eine leitfähige Funktion benötigt, und
Festlegen, falls bestimmt wird, dass der beschädigte Teil (51, 52, 53, 53B, 54, 55, 56, 57) die leitfähige Funktion benötigt, Reparieren unter Verwendung eines Füllstücks bzw. Füllmaterials (71, 72, 73, 74, 75, 76, 77, 92) mit elektrischer Leitfähigkeit als Reparaturaspekt,
wobei der Festlegungsschritt beinhaltet
Bestimmen, ob ein beschädigter Bereich des beschädigten Teils (51, 52, 53, 53B, 54, 55, 56, 57) innerhalb eines Querschnittsbereichs bzw. einer Querschnittsfläche eines vorbestimmten Heftglieds (82, 84) liegt, und
Festlegen, wenn bestimmt wird, dass der Bereich des beschädigten Teils (51, 52, 53, 53B, 54, 55, 56, 57) innerhalb des Querschnittsbereichs liegt, Festlegen des Schneidbereichs, der den Blatthauptkörper (34) und den Vorderkantenschutz (42) durchdringt, gemäß dem Querschnittsbereich des Heftglieds (82, 84), und Reparieren durch Einsetzen des Heftglieds (82, 84) in einen Schnittabschnitt als Reparaturaspekt,
**dadurch gekennzeichnet, dass** die Reparatur durch Einsetzen des Heftglieds (82, 84) ein Anordnen eines Füllstücks bzw. Füllmaterials (71, 72, 73, 74, 75, 76, 77, 92) an einem vorderen Endabschnitt in einer Einsetzrichtung des Heftglieds (82, 84) des durchdringenden Abschnitts in dem Schneidbereich,
wobei das Heftglied (82, 84) in den Bereich eingesetzt wird, wo das Füllmaterial (71, 72, 73, 74, 75, 76, 77, 92) eingesetzt wird, und ein Entfernen eines Teils eines Abschnitts des Heftglieds (82, 84), der zu dem Vorderkantenschutz (42) nach dem Einsetzen des Heftglieds (82, 84) freigelegt ist, beinhaltet.

2. Verfahren zum Reparieren des Blattes (31) nach Anspruch 1, wobei der Festlegungsschritt beinhaltet:
Bestimmen, ob sich der beschädigte Teil (51, 52, 53, 53B, 54, 55, 56, 57) auf einem abgedeckten Abschnitt des Blattglieds befindet, der durch den Vorderkantenschutz (42) abgedeckt ist,
Festlegen, falls bestimmt wird, dass sich der beschädigte Teil (51, 52, 53, 53B, 54, 55, 56, 57) nicht auf dem abgedeckten Abschnitt befindet, eines Abschnitts, der den beschädigten Teil des Vorderkantenschutzes (42) beinhaltet, als Schneidbereich,
Festlegen, falls bestimmt wird, dass sich der beschädigte Teil (51, 52, 53, 53B, 54, 55, 56, 57) auf dem abgedeckten Abschnitt befindet, eines Abschnitts, der den beschädigten Teil des Vorderkantenschutzes (42) und das Blattglied beinhaltet, als Schneidbereich, und
Festlegen der Reparatur durch Füllen eines Schneidbereichs mit einem Füllstück bzw. Füllmaterial (71, 72, 73, 74, 75, 76, 77, 92) als Reparaturaspekt.

3. Verfahren zum Reparieren des Blattes (31) nach Anspruch 2, wobei der Festlegungsschritt ein Festlegen des Schneidbereichs derart beinhaltet, dass eine Schnittfläche bzw. -oberfläche des Vorderkantenschutzes (42) eine Form aufweist, die in einer Tiefenrichtung auf der Blattgliedseite breiter ist als auf einer Flächen- bzw. Oberflächenseite.

4. Verfahren zum Reparieren des Blattes (31) nach Anspruch 2, wobei der Festlegungsschritt ein Festlegen des Schneidbereichs derart beinhaltet, dass eine Schnittfläche bzw. -oberfläche des Vorderkantenschutzes (42) eine Form aufweist, die in einer Tiefenrichtung auf einer Flächen- bzw. Oberflächenseite breiter ist als auf der Blattgliedseite.

5. Verfahren zum Reparieren des Blattes (31) nach Anspruch 4, wobei der Festlegungsschritt, in einem Fall, in dem der Schneidbereich den abgedeckten Abschnitt beinhaltet, ein Festlegen des Schneidbereichs derart beinhaltet, dass der Schneidbereich einer Endfläche bzw. Stirnseite auf der Vorderkantenschutzseite des abgedeckten Abschnitts größer ist als der Schneidbereich einer Endfläche bzw. Stirnseite auf der Blattgliedseite des Vorderkantenschutzes.

6. Verfahren zum Reparieren des Blattes (31) nach einem der Ansprüche 1 bis 5, wobei der Festlegungsschritt beinhaltet
Bestimmen, ob der beschädigte Teil (51, 52, 53, 53B, 54, 55, 56, 57) eine erosionsbeständige Funktion benötigt, und
Festlegen, falls bestimmt wird, dass der beschädigte Teil (51, 52, 53, 53B, 54, 55, 56, 57) die erosionsbeständige Funktion benötigt, eines Bereichs, der den beschädigten Teil des Blattes (31) beinhaltet, als Schneidbereich, Reparatur durch Füllen eines Schneidbereichs mit einem Füllstück bzw. Füllmaterial (71, 72, 73, 74, 75, 76, 77, 92) und Anordnen einer Metallschicht (85) auf einer Fläche bzw. Oberfläche des Füllmaterials (71, 72, 73, 74, 75, 76, 77, 92) als Reparaturaspekt.

7. Verfahren zum Reparieren des Blattes (31) nach Anspruch 6, wobei der Festlegungsschritt ein Festlegen des Reparaturaspekts derart beinhaltet, dass die Metallschicht (85) durch Plattieren, thermisches Spritzen oder Anhaften einer Metallfolie gebildet wird.

8. Verfahren zum Reparieren des Blattes (31) nach Anspruch 6, wobei der Festlegungsschritt ein Festlegen des Reparaturaspekts derart beinhaltet, dass ein Metallglied (86, 87) mit einem netzartigen Abschnitt, der in das Füllmaterial (71, 72, 73, 74, 75, 76, 77, 92) einzubetten ist, auf einer Fläche bzw. Oberfläche des Füllmaterials angeordnet wird, um zu bewirken, dass das Metallglied (86, 87) die Metallschicht ist.

9. Verfahren zum Reparieren des Blattes (31) nach Anspruch 8, wobei der Festlegungsschritt ein Festlegen des Schneidbereichs derart beinhaltet, dass eine Schnittfläche bzw. -oberfläche des Vorderkantenschutzes (42) eine Form aufweist, die in einer Tiefenrichtung auf der Blattgliedseite breiter ist als auf der Flächen- bzw. Oberflächenseite.

10. Verfahren zum Reparieren des Blattes (31) nach einem der Ansprüche 1 bis 9, wobei der Festlegungsschritt beinhaltet
Bestimmen, ob der beschädigte Teil (51, 52, 53, 53B, 54, 55, 56, 57) eine erosionsbeständige Funktion benötigt,
Bestimmen, falls bestimmt wird, dass der beschädigte Teil (51, 52, 53, 53B, 54, 55, 56, 57) keine erosionsbeständige Funktion benötigt, ob sich der beschädigte Teil auf dem Blattglied befindet,
Bestimmen, falls bestimmt wird, dass sich der beschädigte Teil (51, 52, 53, 53B, 54, 55, 56, 57) auf dem Blattglied befindet, ob ein beschädigter Bereich des beschädigten Teils (51, 52, 53, 53B, 54, 55, 56, 57) innerhalb eines Querschnittsbereichs bzw. einer Querschnittsfläche eines vorbestimmten Heftglieds (82, 84) liegt, und
Festlegen, falls bestimmt wird, dass der Bereich des beschädigten Teils (51, 52, 53, 53B, 54, 55, 56, 57) nicht innerhalb des Querschnittsbereichs liegt, eines Bereichs, der den beschädigten Teil (51, 52, 53, 53B, 54, 55, 56, 57) beinhaltet, als Schneidbereich, und Reparatur durch Einsetzen eines Einsetzglieds (71, 72, 73, 74, 75, 76, 77, 92), das unter Verwendung von faserverstärktem Kunststoff gebildet ist bzw. wird, in einen Schnittabschnitt als Reparaturaspekt.

11. Verfahren zum Reparieren des Blattes (31) nach Anspruch 10, wobei der Blatthauptkörper (34) eine Hohlform aufweist, und
der Festlegungsschritt ein Festlegen des Schneidbereichs an einem Abschnitt beinhaltet, der den Vorderkantenschutz (42) und das Blattglied passiert, und der Reparaturaspekt ein Anordnen eines Füllstücks bzw. Füllmaterials innerhalb eines Blatthauptkörpers (34) beinhaltet, der mit dem Einsetzglied (71, 72, 73, 74, 75, 76, 77, 92) vor dem Einsetzen des Einsetzglieds in Kontakt zu bringen ist.

12. Blatt (31), umfassend:
ein Blattglied, das eine Hohlform aufweist, die einen Blatthauptkörper (34) bildet;
einen Führungs- bzw. Vorderkantenschutz (42), der eine Fläche bzw. Oberfläche des Blattglieds an einem Führungs- bzw. Vorderkantenabschnitt des Blatthauptkörpers (34) abdeckt;
ein Eindringglied, das so angeordnet ist, dass es den Vorderkantenschutz (42) und das Blattglied passiert; und
ein Füllstück bzw. Füllmaterial (71, 72, 73, 74, 75, 76, 77, 92), das in zumindest einem Abschnitt mit Hohlform des Blatthauptkörpers (34) angeordnet ist, um das Eindringglied zu halten, während es durch das Blattglied getragen ist,
**dadurch gekennzeichnet, dass** das Eindringglied ein Heftglied (82, 84) ist, das dahingehend ausgebildet ist, eine Fläche bzw. Oberfläche des Vorderkantenschutzes (42) zu glätten und einen Teil eines Abschnitts des Heftglieds (82, 84) zu entfernen, der zu dem Vorderkantenschutz freigelegt ist,
wobei das Füllmaterial (71, 72, 73, 74, 75, 76, 77, 92) zwischen dem Heftglied, dem Vorderkantenschutz und dem Blattglied eingefüllt wird.

## Revendications

1. Méthode pour réparer une pale (31), la méthode comprenant :
une étape de spécification consistant à spécifier une partie endommagée (51, 52, 53, 53B, 54, 55, 56, 57) de la pale (31), la pale (31) présentant un élément de pale qui forme un corps principal de pale (34), et un protecteur de bord d'attaque (42) qui recouvre une surface de l'élément de pale au niveau d'une portion de bord d'attaque du corps principal de pale (34) ;
une étape de réglage consistant à régler une plage de coupe et un aspect de réparation pour la pale (31) en fonction d'un état endommagé de la partie endommagée (51, 52, 53, 53B, 54, 55, 56, 57) ; et
une étape de réparation consistant à couper et réparer la pale (31) sur la base de la plage de coupe et de l'aspect de réparation réglés,
dans laquelle l'étape de réglage inclut
le fait de déterminer si la partie endommagée (51, 52, 53, 53B, 54, 55, 56, 57) nécessite une fonction conductrice, et
le réglage, s'il est déterminé que la partie endommagée (51, 52, 53, 53B, 54, 55, 56, 57) nécessite la fonction conductrice, de la réparation à l'aide d'une charge (71, 72, 73, 74, 75, 76, 77, 92) présentant la conductivité électrique comme aspect de réparation,
dans laquelle l'étape de réglage inclut
le fait de déterminer si une zone endommagée de la partie endommagée (51, 52, 53, 53B, 54, 55, 56, 57) fait partie d'une zone de section transversale d'un élément d'attache (82, 84) prédéterminé, et
le réglage, s'il est déterminé que la zone de la partie endommagée (51, 52, 53, 53B, 54, 55, 56, 57) fait partie de la zone de section transversale, de la plage de coupe pénétrant le corps principal de pale (34) et le protecteur de bord d'attaque (42) est réglé en fonction de la zone de section transversale de l'élément d'attache (82, 84), et la réparation de l'insertion de l'élément d'attache (82, 84) dans une portion découpée comme aspect de réparation,
**caractérisé en ce que** la réparation d'insertion de l'élément d'attache (82, 84) inclut l'agencement d'une charge (71, 72, 73, 74, 75, 76, 77, 92) au niveau d'une portion d'extrémité avant dans une direction d'insertion de l'élément d'attache (82, 84) de la portion pénétrante dans la plage de découpe, l'élément d'attache (82, 84) est inséré dans la région où la charge (71, 72, 73, 74, 75, 76, 77, 92) est insérée, et le retrait d'une partie d'une portion de l'élément d'attache (82, 84) exposée au protecteur de bord d'attaque (42) après insertion de l'élément d'attache (82, 84).

2. Méthode pour réparer la pale (31) selon la revendication 1, dans laquelle l'étape de réglage inclut
le fait de déterminer si la partie endommagée (51, 52, 53, 53B, 54, 55, 56, 57) est présente sur une portion recouverte de l'élément de pale qui est recouverte par le protecteur de bord d'attaque (42),
le réglage, s'il est déterminé que la partie endommagée (51, 52, 53, 53B, 54, 55, 56, 57) n'est pas présente sur la portion recouverte, d'une portion incluant la partie endommagée du protecteur de bord d'attaque (42) comme plage de coupe,
le réglage, s'il est déterminé que la partie endommagée (51, 52, 53, 53B, 54, 55, 56, 57) est présente sur la portion recouverte, d'une portion incluant la partie endommagée du protecteur de bord d'attaque (42) et l'élément de pale comme plage de coupe, et
le réglage d'une réparation consistant à remplir une portion découpée avec une charge (71, 72, 73, 74, 75, 76, 77, 92) comme aspect de réparation.

3. Méthode pour réparer la pale (31) selon la revendication 2, dans laquelle l'étape de réglage inclut le réglage de la plage de coupe de sorte qu'une surface découpée du protecteur de bord d'attaque (42) présente une forme qui est plus large sur le côté d'élément de pale qu'un côté de surface dans une direction de profondeur.

4. Méthode pour réparer la pale (31) selon la revendication 2, dans laquelle l'étape de réglage inclut le réglage de la plage de coupe de sorte qu'une surface découpée du protecteur de bord d'attaque (42) présente une forme qui est plus large sur un côté de surface que le côté d'élément de pale dans une direction de profondeur.

5. Méthode pour réparer la pale (31) selon la revendication 4, dans laquelle l'étape de réglage inclut, dans un cas où la plage de coupe inclut la portion recouverte, le réglage de la plage de coupe de sorte que la plage de coupe d'une face d'extrémité sur le côté de protecteur de bord d'attaque de la portion recouverte soit supérieure à la plage de coupe d'une face d'extrémité sur le côté d'élément de pale du protecteur de bord d'attaque.

6. Méthode pour réparer la pale (31) selon l'une quelconque des revendications 1 à 5, dans laquelle l'étape de réglage inclut
le fait de déterminer si la partie endommagée (51, 52, 53, 53B, 54, 55, 56, 57) nécessite une fonction résistante à l'érosion, et
le réglage, s'il est déterminé que la partie endommagée (51, 52, 53, 53B, 54, 55, 56, 57) nécessite la fonction résistante à l'érosion, d'une plage incluant la partie endommagée de la pale (31) comme plage de coupe, et la réparation consistant à remplir une portion découpée avec une charge (71, 72, 73, 74, 75, 76, 77, 92) et l'agencement d'une couche métallique (85) sur une surface de la charge (71, 72, 73, 74, 75, 76, 77, 92) comme aspect de réparation.

7. Méthode pour réparer la pale (31) selon la revendication 6, dans laquelle l'étape de réglage inclut le réglage de l'aspect de réparation de sorte que la couche métallique (85) soit formée par placage, pulvérisation thermique ou adhérence d'une feuille métallique.

8. Méthode pour réparer la pale (31) selon la revendication 6, dans laquelle l'étape de réglage inclut le réglage de l'aspect de réparation de sorte qu'un élément métallique (86, 87) incluant une portion de type filet soit enfoui dans la charge (71, 72, 73, 74, 75, 76, 77, 92) est agencé sur une surface de la charge pour amener l'élément métallique (86, 87) à être la couche métallique.

9. Méthode pour réparer la pale (31) selon la revendication 8, dans laquelle l'étape de réglage inclut le réglage de la plage de coupe de sorte qu'une surface découpée du protecteur de bord d'attaque (42) présente une forme qui est plus large sur le côté d'élément de pale qu'un côté de surface dans une direction de profondeur.

10. Méthode pour réparer la pale (31) selon l'une quelconque des revendications 1 à 9, dans laquelle l'étape de réglage inclut
le fait de déterminer si la partie endommagée (51, 52, 53, 53B, 54, 55, 56, 57) nécessite une fonction résistante à l'érosion,
le fait de déterminer, s'il est déterminé que la partie endommagée (51, 52, 53, 53B, 54, 55, 56, 57) ne nécessite pas la fonction résistante à l'érosion, si la partie endommagée est présente sur l'élément de pale,
le fait de déterminer, s'il est déterminé que la partie endommagée (51, 52, 53, 53B, 54, 55, 56, 57) est présente sur l'élément de pale, si une zone endommagée de la partie endommagée (51, 52, 53, 53B, 54, 55, 56, 57) fait partie d'une zone de section transversale d'un élément d'attache (82, 84) prédéterminé, et
le réglage, s'il est déterminé que la zone de la partie endommagée (51, 52, 53, 53B, 54, 55, 56, 57) ne fait pas partie de la zone de section transversale, d'une plage incluant la partie endommagée (51, 52, 53, 53B, 54, 55, 56, 57) comme plage de coupe, et la réparation consistant à insérer un élément d'insertion (71, 72, 73, 74, 75, 76, 77, 92) formé en utilisant des plastiques renforcés de fibres dans une portion découpée comme aspect de réparation.

11. Méthode pour réparer la pale (31) selon la revendication 10, dans laquelle
le corps principal de pale (34) présente une forme creuse, et
l'étape de réglage inclut le réglage de la plage de coupe au niveau d'une portion traversant le protecteur de bord d'attaque (42) et l'élément de pale, et l'aspect de réparation inclut l'agencement d'une charge à l'intérieur d'un corps principal de pale (34) pour qu'elle soit mise en contact avec l'élément d'insertion (71, 72, 73, 74, 75, 76, 77, 92) avant l'insertion de l'élément d'insertion.

12. Pale (31) comprenant :
un élément de pale présentant une forme creuse qui forme un corps principal de pale (34) ;
un protecteur de bord d'attaque (42) qui recouvre une surface de l'élément de pale au niveau d'une portion de bord d'attaque du corps principal de pale (34) ;
un élément pénétrant qui est agencé pour traverser le protecteur de bord d'attaque (42) et l'élément de pale ; et
une charge (71, 72, 73, 74, 75, 76, 77, 92) qui est agencée dans au moins une portion présentant une forme creuse du corps principal de pale (34) pour maintenir l'élément pénétrant tout en étant soutenue par l'élément de pale,
**caractérisé en ce que** l'élément pénétrant est un élément d'attache (82, 84) qui est formé pour lisser une surface du protecteur de bord d'attaque (42) et la partie retirée d'une portion de l'élément d'attache (82, 84) exposée au protecteur de bord d'attaque,
dans laquelle la charge (71, 72, 73, 74, 75, 76, 77, 92) est versée entre l'élément d'attache, le protecteur de bord d'attaque et l'élément de pale.
